# EUROPÄISCHE PATENTSCHRIFT

(11) **EP 3 371 043 B1**
(45) Veröffentlichungstag und Bekanntmachung des Hinweises auf die Patenterteilung: **29.04.2020**
(21) Anmeldenummer: 16784171.7
(22) Anmeldetag: 18.10.2016
(51) Int. Cl.: B63B 1/36, B63B 13/02, B63H 25/46

(54) **ABDECKVORRICHTUNG SOWIE STRAHLRUDER**
COVER DEVICE AND THRUSTER
DISPOSITIF DE RECOUVREMENT ET GOUVERNAIL À JET

(30) Priorität: 02.11.2015 DE 102015221427
(43) Veröffentlichungstag der Anmeldung: 12.09.2018
(73) Patentinhaber: SKF Marine GmbH, 20457 Hamburg (DE)
(72) Erfinder: ZOLLENKOPF, Michael, 22607 Hamburg (DE); SPARDEL, Holger, 22081 Hamburg (DE); SIEBRECHT, Thomas, 25336 Elmshorn (DE); LEITLOFF, Uwe, 30974 Wennigsen (DE); ALBRECHT, Ulrich, 37627 Stadtoldendorf (DE); ALBRECHT, Frank, 37627 Stadtoldendorf (DE); DANNEBERG, Kai, 22111 Hamburg (DE)
(74) Vertreter: Kuhstrebe, Jochen
(86) Internationale Anmeldenummer: PCT/EP2016/074959
(87) Internationale Veröffentlichungsnummer: WO 2017/076637

(56) Entgegenhaltungen:
- JP-A- 2003 276 675
- KR-A- 20100 031 009
- KR-A- 20120 063 751
- KR-A- 20130 000 144
- US-A- 3 151 663
- US-A- 4 033 247
- US-A- 4 793 658
- US-A- 5 067 765

## Beschreibung

Die Erfindung betrifft eine Abdeckvorrichtung zum zumindest bereichsweisen Verschließen einer unter Wasser liegenden Öffnung in einem Rumpf eines Wasserfahrzeugs, insbesondere einer Öffnung eines Querkanals eines Strahlruders. Darüber hinaus hat die Erfindung ein Strahlruder, insbesondere ein Bug- oder Heckstrahlruder, zum Gegenstand.

Moderne Passagier- oder Frachtschiffe verfügen im Allgemeinen über eine Vielzahl von unter Wasser liegenden Öffnungen. Derartige Öffnungen dienen zum Beispiel zum Ansaugen von Kühlwasser aus dem Fahrwasser und zur Wiedereinleitung des erwärmten Kühlwassers in das Fahrwasser des Schiffes. Weiterhin können zur Verbesserung der Manövrierfähigkeit eines Schiffes zum Beispiel Strahlruder im Bug- und/oder Heckbereich vorgesehen sein.

Die US 3 151 663 A offenbart eine aufblasbare Verschlussvorrichtung für Öffnungen insbesondere eines Amphibienfahrzeugs. Aus der JP 2003 276675 A ist eine Verschlussvorrichtung für eine Öffnung für ein Bugstrahlruder bekannt und aus der KR 2013 0000144 A eine Verschlussvorrichtung für eine Öffnung eines Strahlruders. Die KR 2010 0031009 A offenbart eine mittels Druckluft aufzupumpende Verschlussvorrichtung für eine Öffnung in einem Schiffskörper.

Bei günstigen Strömungs- und Wetterverhältnissen können Strahlruder einen kostenintensiven Einsatz von Schleppern bei Anlegemanövern, insbesondere zum Querversetzen des Schiffes, entbehrlich machen. Derartige Strahlruder erfordern jedoch einen den Schiffsrumpf unterhalb der Wasserlinie im Bug- oder Heckbereich vollständig durchsetzenden Querkanal, wodurch zwei großflächige gegenüberliegende Öffnungen entstehen.

Durch die endseitigen Öffnungen des Querkanals entstehen Verwirbelungen im Wasser, die zu einer Erhöhung des Strömungswiderstands des Rumpfes im normalen Fahrbetrieb eines Schiffes führen. Hieraus resultiert wiederum eine heutzutage inakzeptable Erhöhung des Kraftstoffverbrauchs. Diesem Umstand kommt aufgrund der vielfach hohen Fahrgeschwindigkeiten von Fracht- und Passagierschiffen, die in einem Bereich von 20 Knoten liegen können, eine erhöhte Bedeutung zu.

Um den Strömungswiderstand eines Schiffsrumpfs im normalen Fahrbetrieb zu reduzieren, sind beispielsweise kreisförmige Drehklappen zum Verschließen der Öffnungen eines Querkanals eines Strahlruders bekannt. Durch das Verdrehen der jeweils im Bereich einer der beiden gegenüberliegenden Öffnungen des Querkanals angeordneten Drehklappen, lassen sich die Öffnungen im normalen Fahrbetrieb des Schiffes nahezu bündig mit der Rumpfaußenhaut verschließen. Im Manöverbetrieb des Schiffes werden die Drehklappen durch Verdrehen um ihre Längsmittelachse um 90° geöffnet. Im vollständig geöffneten Zustand sind die Drehklappen parallel zur Längsrichtung des Querkanals orientiert, so dass eine von einem Antriebspropeller des Strahlruders erzeugte Wasserströmung die Drehklappen aufgrund deren in Relation zum Durchmesser des Querkanals geringer Materialstärke weitgehend ungehindert passieren kann.

Langjährige Erfahrungen mit derartigen Drehklappen haben jedoch gezeigt, dass insbesondere deren in der Regel diametral in der Öffnung angeordnete Lagerstellen einer hohen mechanischen Belastung durch den Propellerstrahl des Strahlruders, äußere Strömungskräfte sowie den Wellenschlag unterliegen. Weiterhin sind die Lagerstellen der Drehklappen permanent dem korrosiven Fahrwasser ausgesetzt. Alle Einflussfaktoren können für sich oder in Kombination miteinander im Extremfall bis zum vollständigen Herausfallen einer derartigen Drehklappe führen.

Aufgabe der Erfindung ist es daher, eine wartungsarme und zuverlässige Abdeckvorrichtung für eine unter Wasser liegende Öffnung in einem Rumpf eines Wasserfahrzeugs anzugeben. Darüber hinaus ist es eine Aufgabe der Erfindung, ein möglichst wartungsarmes Strahlruder für ein Wasserfahrzeug anzugeben.

Diese Aufgabe wird zunächst durch eine Abdeckvorrichtung mit den Merkmalen des Patentanspruchs 1 gelöst.

Dadurch, dass die Abdeckvorrichtung mindestens eine volumenveränderbare Hohlkammerlippe mit mindestens einem Auftriebskörper aufweist und die mindestens eine Hohlkammerlippe durch die Zufuhr oder die Abfuhr eines Fluids, insbesondere Luft, in einen Expansionszustand oder in einen Einschrumpfzustand versetzbar ist, ist ein weitgehend verschleißfreier und wartungsarmer Aufbau der Abdeckvorrichtung gegeben, der insbesondere ohne Lager- oder Gelenkstellen auskommt. Infolgedessen ist ein störungsfreier Betrieb in korrosiven Medien, insbesondere in Meerwasser, gegeben. Im Expansionszustand gewährleistet der hohe Druck des eingebrachten Fluids bzw. Mediums eine hinreichende Formstabilität der Hohlkammerlippe und damit im normalen Fahrbetrieb einen zuverlässigen Verschluss der Öffnung im Rumpf des Schiffes. Die Abdeckvorrichtung wird bevorzugt mit Druckluft bzw. mit Luft, die unter einem höheren Druck als der Normalluftdruck (1013 hPa) steht, als Fluid betrieben, die an Bord von Schiffen in der Regel immer bereitgehalten wird. Als Fluid können ferner Flüssigkeiten, wie zum Beispiel Wasser, Meerwasser oder Öl zum Einsatz kommen. Die Hohlkammerlippe weist im Expansionszustand - im Fall einer Öffnung mit einer kreisförmigen Querschnittsgeometrie - eine annähernd halbovale bzw. zungenartige Formgebung auf.

Nach Maßgabe einer vorteilhaften Weiterbildung ist vorgesehen, dass die Hohlkammerlippe mindestens ein biegeschlaffes und zugfestes Formgebungselement aufweist. Hierdurch kann der Hohlkammerlippe beim Erreichen des maximalen Expansionszustands eine definierte und von einer ballonförmigen Geometrie im Allgemeinen abweichende, beispielsweise mattenförmige Formgebung, verliehen werden.

Erfindungsgemäß ist die Hohlkammerlippe mit einem fluiddichten und flexiblen Flächengebilde aufgebaut. Dies ermöglicht eine wesentliche Gestaltänderung der Hohlkammerlippe durch die Zufuhr oder die Abfuhr des Fluids. Bei dem Flächengebilde kann es sich zum Beispiel um eine flexible und ggfls. elastische Folie oder einen fluiddichten, ggfls. gummierten, textilen Stoff handeln, dessen Materialstärke in Relation zu dessen Flächenausdehnung klein ist.

Gemäß einer Weiterbildung ist die Öffnung im Expansionszustand der Hohlkammerlippe im Wesentlichen vollständig verschlossen und im Einschrumpfzustand im Wesentlichen vollständig freigegeben. Hierdurch ist im normalen Fahrbetrieb eines Wasserfahrzeugs, insbesondere Schiffes, die Öffnung praktisch vollständig verschlossen, so dass eine Erhöhung des Strömungswiderstands des Rumpfes im Wasser weitestgehend ausgeschlossen ist.

Bevorzugt ist im Bereich eines freien Endes der Hohlkammerlippe zumindest abschnittsweise mindestens ein bistabiles Federelement angeordnet. Durch das elastische und zugleich bistabile Element wird der Wechsel zwischen dem Einschrumpfzustand und dem Expansionszustand der Hohlkammerlippe unterstützt. Das freie Ende der Hohlkammerlippe verläuft im Expansionszustand im Wesentlichen entlang eines dem Gewässsergrund zugewandten unteren Öffnungsabschnitts und schließt im Einschrumpfzustand im Idealfall bündig mit einem hiervon weggerichteten oberen Öffnungsabschnitt ab. Das bistabile Federelement kann zum Beispiel mit Gummi, mit Kunststoff, mit einem Metall, insbesondere mit Federstahl, oder einer Kombination der genannten Materialien gebildet sein.

Vorzugsweise erfolgt ein Wechsel zwischen dem Expansionszustand und dem Einschrumpfzustand der Hohlkammerlippe und umgekehrt aufgrund des bistabilen Federelements sprunghaft. Infolgedessen werden Zwischenzustände, in denen die Öffnung nur teilweise von der Abdeckvorrichtung verschlossen bzw. von dieser freigegeben ist, schnell durchlaufen. Ein Ansaugen von Teilen des Flächengebildes der Hohlkammerlippe durch den Propeller des Strahlruders wird somit zuverlässig vermieden.

Bei einer Weiterbildung ist in der Öffnung zumindest bereichsweise ein Anlageelement mit einem kleinen Strömungswiderstand, insbesondere ein Gitter, angeordnet. Hierdurch ist im Expansionszustand eine zumindest einseitig wirkende, seitliche Abstützung der Hohlkammerlippe in der Verlaufsrichtung des Querkanals gewährleistet. Dieses Anlageelement kann zum Beispiel mit Gittern, Lochblechen etc. realisiert sein.

Im Fall einer bevorzugten Ausführung ist die mindestens eine Hohlkammerlippe im Einschrumpfzustand vollständig in einem Lagerraum und das freie Ende der Hohlkammerlippe im Expansionszustand zumindest bereichsweise formschlüssig in einer Vertiefung aufnehmbar. Durch den Lagerraum ist gewährleistet, dass sich die Hohlkammerlippe im Einschrumpfzustand vollständig aus dem Querschnitt der Öffnung zurückzieht und keine relevante Erhöhung des Strömungswiderstands im Betrieb des Strahlruders eintritt. Aufgrund der Vertiefung ist eine zusätzliche Lagesicherung des freien Endes der Hohlkammerlippe in deren Expansionszustand gewährleistet, was zu einer weiteren Verbesserung der Abdichtungsfunktionalität der Abdeckvorrichtung führt. Die bevorzugt quaderförmige Vertiefung ist im Allgemeinen im Bereich eines Tiefpunkts des unteren Öffnungsabschnitts der Öffnung vorgesehen. Unter dem Begriff des Tiefpunkts wird im Kontext der Beschreibung ein fiktiver, dem Meererboden am nächsten liegender Punkt bzw. ein "unterer" Scheitelpunkt der halbkreisförmigen Querschnittsgeometrie der unteren Öffnung des Strahlruders verstanden.

Erfindungsgemäß ist der mindestens eine Auftriebskörper im Bereich des freien Endes der Hohlkammerlippe angeordnet und weist eine geringere Dichte als Wasser auf. Durch die vom Gewässer- bzw. Meeresgrund weggerichtete bzw. entgegen der Schwerkraft wirkende Auftriebskraft des Auftriebskörpers wird der Übergang zwischen dem Expansionszustand und dem Einschrumpfzustand der Hohlkammerlippe unterstützt. Der Auftriebskörper kann beispielsweise die Form eines Torusabschnitts aufweisen. Weiterhin können mehrere, bevorzugt gleichmäßig zueinander beabstandet über das freie Ende der Hohlkammerlippe verteilt angeordnete Auftriebskörper vorgesehen sein.

Darüber hinaus wird die eingangs genannte Aufgabe durch ein Strahlruder, insbesondere ein Bug- oder Heckstrahlruder, nach Maßgabe des Patentanspruchs 8 gelöst.

Dadurch, dass das Strahlruder für ein Wasserfahrzeug mindestens eine Abdeckvorrichtung nach einem der Patentansprüche 1 bis 7 aufweist, lässt sich ein Strahlruder für ein Wasserfahrzeug bereitstellen, dessen in der Regel zwei Öffnungen aufweisender Querkanal zuverlässig und wartungsarm verschließbar und wieder freigebbar sind. Hierdurch können die Öffnungen im normalen Fahrbetrieb zur Minimierung des Strömungswiderstands vollständig geschlossen und im Manövrierbetrieb bei aktivem Strahlruder komplett freigegeben werden. Das Strahlruder kann zum Beispiel als Bug- oder als Heckstrahlruder ausgeführt sein. Die erfindungsgemäßen Abdeckvorrichtungen kommen hierbei ohne störanfällige mechanische Gelenk- und Lagerstellen aus, die vielfach zu Ausfällen neigen. Weiterhin sind keine störanfälligen mechanischen Antriebsorgane, wie zum Beispiel Getriebe oder Motoren, zum Betrieb der Abdeckvorrichtung notwendig.

In der Zeichnung weisen dieselben konstruktiven Elemente die gleichen Bezugsziffern auf. In der Zeichnung zeigt:
- **Fig. 1**: eine Draufsicht auf eine unter Wasser liegende Öffnung eines Strahlruders in einem Rumpf eines Wasserfahrzeugs mit einer Abdeckvorrichtung in einem vollständigen Einschrumpfzustand,
- **Fig. 2**: eine schematische Draufsicht auf die Abdeckvorrichtung von Fig. 1 in einem vollständigen Expansionszustand, und
- **Fig. 3**: einen Längsschnitt durch das Strahlruder mit der Abdeckvorrichtung von Fig. 1, 2 und einer weiteren Abdeckvorrichtung.

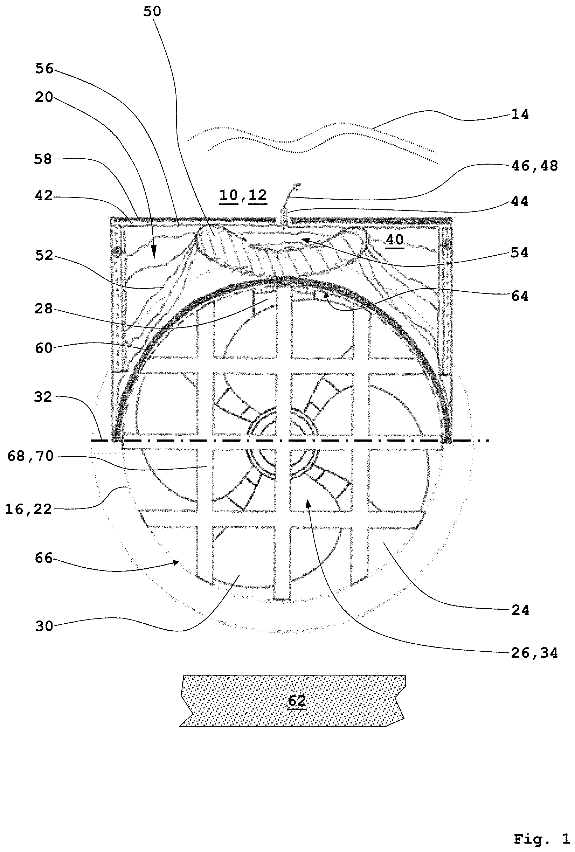

Die Fig. 1 illustriert eine Draufsicht auf eine unter Wasser liegende Öffnung eines Strahlruders in einem Rumpf eines Wasserfahrzeugs mit einer Abdeckvorrichtung in einem vollständigen Schrumpfzustand.

In einem Rumpf 10 eines hier exemplarisch als Schiff ausgebildeten Wasserfahrzeugs 12 befindet sich eine unter Wasser 14 liegende Öffnung 16 mit einer kreisförmigen Querschnittsgeometrie, die mittels einer erfindungsgemäßen Abdeckvorrichtung 20 zeitweise verschließbar ist. Die Öffnung 16 ist hier lediglich beispielhaft als eine steuer- oder backbordseitige Öffnung 22 eines den Rumpf 10 vollständig durchsetzenden Querkanals 24 eines Strahlruders 26 ausgestaltet. Das Strahlruder 26 verfügt über eine Antriebseinheit 28 zum drehenden Antrieb eines Propellers 30, um eine zum leichteren Manövrieren notwendige, starke Wasserströmung in dem quer zu einer Längsachse 32 des Rumpfes 10 verlaufenden Querkanal 24 zu erzeugen. Das Strahlruder 26 kann hierbei zum Beispiel als ein Bug- oder Heckstrahlruder 34 ausgeführt sein. Grundsätzlich lassen sich mittels der Abdeckvorrichtung 20 beliebige unter Wasser liegende Öffnungen in einem Rumpf eines Wasserfahrzeugs verschließen.

Die Abdeckvorrichtung 20 umfasst unter anderem eine volumenveränderbare, näherungsweise sackförmige Hohlkammerlippe 40, die in dem hier dargestellten vollständigen "Einschrumpfzustand" komplett in einem Lagerraum 42 im Bereich des Rumpfes 10 aufgenommen ist, so dass die Öffnung 22 vollständig freigegeben ist und bei aktiviertem Strahlruder 26 eine Beeinträchtigung der Wasserströmung im Querkanal 24 praktisch ausgeschlossen ist.

Über einen rohrförmigen Anschluss 44 kann der Hohlkammerlippe 40 ein Fluid 46, bei dem es bevorzugt um Druckluft 48 oder ein anderes Gas handelt, zugeführt oder aus dieser abgeführt bzw. abgesaugt werden. Durch eine ausreichende Zufuhr von Druckluft 48 wird die Hohlkammerlippe 40 in den s. g. "Expansionszustand", d. h. einen vollständig expandierten Zustand (vgl. insb.

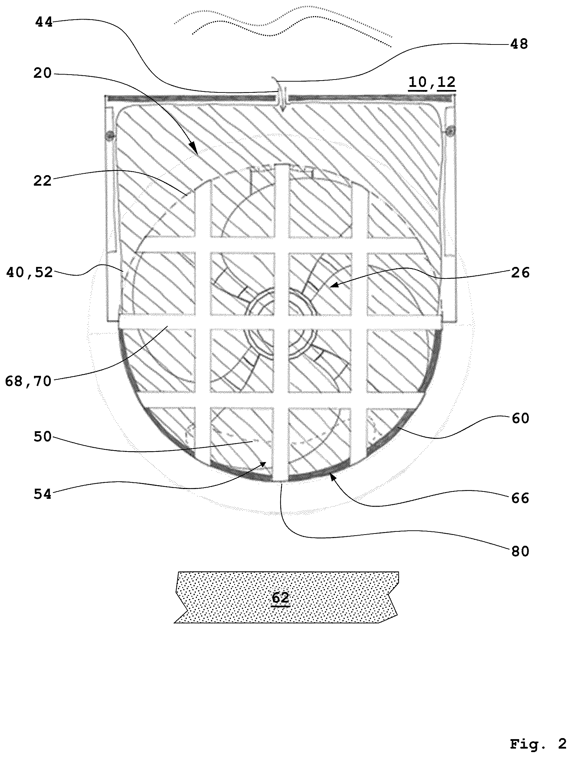

Fig. 2) versetzt, während die Hohlkammerlippe 40 durch das möglichst komplette Absaugen der Druckluft 48 in den hier gezeigten, s. g. "Einschrumpfzustand" versetzbar ist.

Um den Übergang von dem "Expansionszustand" in den "Einschrumpfzustand" zu unterstützen, ist in die Hohlkammerlippe 40 ein Auftriebskörper 50 integriert, dessen Dichte deutlich kleiner als die von Wasser ist. Die Hohlkammerlippe 40 ist mit einem fluiddichten, faltbaren sowie möglichst flexiblen und ggfls. elastischen Flächengebilde 52 aufgebaut. Der Auftriebskörper 50 ist hier exemplarisch im Bereich eines freien Endes 54 der Hohlkammerlippe 40 und außerhalb dieser angeordnet. Ein vom freien Ende 54 weggerichtetes festes Ende 56 der Hohlkammerlippe 40 ist im Bereich eines oberseitigen Deckels 58 des Lagerraums 42 angebracht. Bei dem Flächengebilde 52 der Hohlkammerlippe 40 kann es sich beispielsweise um eine optional faserarmierte, hochfeste Kunststofffolie oder eine Elastomerfolie handeln.

Weiterhin verfügt die Hohlkammerlippe 40 über ein bistabiles Federelement 60, z. B. eine dickwandige Kunststoffmatte, die im hier dargestellten "Einschrumpfzustand" im Wesentlichen entlang eines vom Gewässergrund 62 bzw. dem Meeresgrund abgewandten, oberen Öffnungsabschnitts 64 verläuft. Das eine im Wesentlichen halbkreisringförmige Querschnittsgeometrie aufweisende bistabile Federelement 60 dient dazu, jeden Wechsel zwischen dem "Einschrumpfzustand" und dem "Expansionszustand" der Hohlkammerlippe 40 nach Art des "Knackfroschprinzips" übergangslos bzw. möglichst sprunghaft erfolgen zu lassen, um Zwischenzustände zu vermeiden. An den oberen Öffnungsabschnitt 64 schließt sich umfangsseitig ein dem Gewässergrund 62 zugerichteter unterer Öffnungsabschnitt 66 an. Sowohl der obere als auch der untere Öffnungsabschnitt 64, 66 verfügen hier jeweils über eine näherungsweise halbzylindrische Formgebung, die zusammen eine in etwa kreisförmige Querschnittsgeometrie des Querkanals 24 ausbilden.

Darüber hinaus ist hier ein exemplarisch als ein Gitter 68 ausgestaltetes Anlageelement 70 vorgesehen, das als eine einseitige Seitenführung für die Hohlkammerlippe 40 in ihrem vollständig expandierten Zustand bzw. im Expansionszustand dient. Alternativ kann ein weiteres, hier nicht dargestelltes Gitter vorgesehen sein, das parallel beabstandet zum Gitter 68 verläuft, so dass im "Expansionszustand" der Hohlkammerlippe 40 (vgl. insb. Fig. 2) - der üblicherweise im normalen Fahrbetrieb des Wasserfahrzeugs bzw. des Schiffes zum Verschließen der Öffnung 22 des Querkanals 24 eingestellt ist - eine besonders zuverlässige beidseitige Führung der Hohlkammerlippe 40 zwischen beiden Gittern gewährleistet ist.

Die Fig. 2 zeigt eine schematische Draufsicht auf die Abdeckvorrichtung von Fig. 1 im vollständigen "Expansionszustand".
Im "Expansionszustand" verläuft das freie Ende 54 der Hohlkammerlippe 40 bzw. das bistabile Federelement 60 im Bereich des unteren Öffnungsabschnitts 66, wodurch die Öffnung 22 des Strahlruders 26 praktisch vollständig verschlossen ist und sich im normalen Fahrbetrieb keine nennenswerte Erhöhung des Strömungswiderstands des Rumpfes 10 des Wasserfahrzeugs 12 ergibt. Der Auftriebskörper 50 ist im "Expansionszustand" im Bereich eines Tiefpunkts 80 des unteren Öffnungsabschnitts 66 lokalisiert.

Hierbei stützt sich die zungenförmige Hohlkammerlippe 40 einseitig an dem Gitter 68 ab. Der Wechsel vom "Einschrumpfzustand" (vgl. insb. Fig. 1) in den hier gezeigten "Expansionszustand" der Hohlkammerlippe 40, erfolgt durch das Zuführen von Druckluft 48 über den Anschluss 44 in das sackartige Flächengebilde 52 der Hohlkammerlippe 40, das sich infolgedessen bis zum Erreichen des vollständigen "Expansionszustands" aufbläht.

Das bistabile Federelement 60 springt beim Übergang vom "Einschrumpfzustand" in den "Expansionszustand" schlagartig bzw. übergangslos in die hier gezeigte Stellung, die spiegelsymmetrisch zum Verlauf des Federelements 60 im Einschrumpfzustand ist und in der das Federelement 60 bzw. das freie, halbkreisförmige Ende 54 der Hohlkammerlippe 40 zur Gewährleistung einer optimalen Abdichtungswirkung im Idealfall vollständig im Bereich des unteren Öffnungsabschnitts 66 der Öffnung 22 des Strahlruders 26 anliegt.

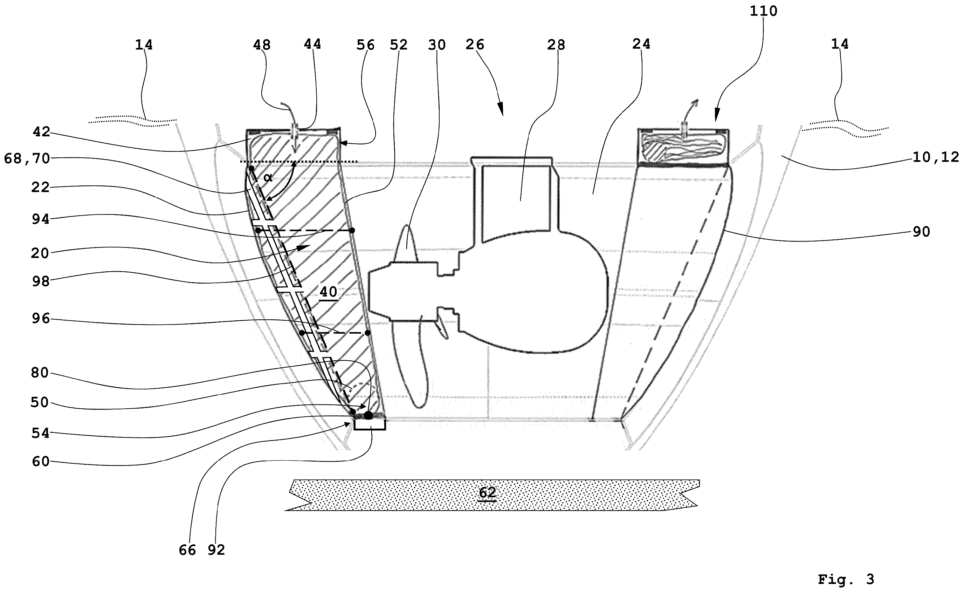

Die Fig. 3 zeigt einen Längsschnitt durch das Strahlruder mit der Abdeckvorrichtung von Fig. 1, 2 und eine weitere Abdeckvorrichtung.

Das Strahlruder 26 umfasst den den Rumpf 10 des Wasserfahrzeugs 12 unter Wasser 14 vollständig durchsetzenden Querkanal 24. Der näherungsweise hohlzylindrische Querkanal 24 verfügt über die Öffnung 22 sowie eine weitere, gegenüberliegend zu dieser in den Rumpf 10 eingebrachte Öffnung 90. Unterhalb des Rumpfes 10 des Wasserfahrzeugs 12 liegt beabstandet der Gewässergrund 62. Innerhalb des Querkanals 24 des Strahlruders 26 befindet sich der Propeller 30 mit seiner zumindest teilweise außerhalb des Querkanals 24 angeordneten Antriebseinheit 28.

Die Öffnung 22 des Querkanals 24 ist durch die sich hier im "Expansionszustand" befindende Abdeckvorrichtung 20 vollständig verschlossen bzw. bedeckt. Mittels der über den Anschluss 44 bevorzugt ständig zu- bzw. nachgeführten Druckluft 48 ist eine dauerhafte Aufrechterhaltung des "Expansionszustands" der Hohlkammerlippe 40 im normalen Fahrbetrieb des Wasserfahrzeugs 12 möglich.

Im Bereich des freien Endes 54 der Hohlkammerlippe 40 befinden sich das bistabile Federelement 60 und der Auftriebskörper 50. Durch das hier perspektivisch angedeutete und hier als Gitter 68 realisierte Anlageelement 70 erfährt die Hohlkammerlippe 40 eine seitliche Lagesicherung, so dass diese stets bündig mit dem Rumpf 10 des Wasserfahrzeugs 12 abschließt und im normalen Fahrbetrieb ein zuverlässiger Verschluss der Öffnung 22 gewährleistet ist.

Zur weiteren Optimierung der Lagesicherung der Hohlkammerlippe 40 innerhalb der Öffnung 22 ist in dem unteren Öffnungsabschnitt 66 im Bereich des Tiefpunkts 80 mindestens eine zum Beispiel quaderförmige Vertiefung 92 bzw. ein parallel zu einer Schiffslängsachse verlaufender "Graben" bzw. eine "Rinne" vorgesehen, in der das freie Ende 54 der Hohlkammerlippe 40 im "Expansionszustand" zumindest bereichsweise formschlüssig aufnehmbar bzw. darin einbringbar ist.

Innerhalb der Hohlkammerlippe 40 sind hier lediglich exemplarisch drei zum Beispiel band- oder bahnenförmige Formgebungselement 94, 96, 98 vorgesehen. Diese Formgebungselemente 94, 96, 98 können Zugkräfte, jedoch keine wesentlichen Druckkräfte aufnehmen und dienen dazu, der Hohlkammerlippe 40 im Expansionszustand eine wohldefinierte, z. B. matten- bzw. matratzenartige Form zu verleihen. Die Formgebungselemente 94, 96 verlaufen vorzugsweise annähernd parallel zum Querkanal 24, während das einzelne Formgebungselement 98 unter einem Winkel α von hier lediglich beispielsweise etwa 85° geneigt zu dem Querkanal 24 verläuft. Das Formgebungselement 98 kann zum Beispiel zwischen dem bistabilen Federelement 60 und dem oberseitig im Lagerraum 42 fixierten festen Ende 56 der Hohlkammerlippe 40 angeordnet sein. Die Formgebungselemente 94, 96 sowie 98 können zum Beispiel mit textilen Bändern mit einer hohen Zugfestigkeit aufgebaut sein. Alternativ können die Formgebungselemente 94, 96 sowie 98 aus demselben Flächengebilde 52 wie die Hohlkammerlippe 40 bestehen und hierbei bahnförmig ausgestaltet sein.

Die zweite Öffnung 90 des Querkanals 24 des Strahlruders 26 ist mittels einer weiteren Abdeckvorrichtung 110 verschließbar. Die Abdeckvorrichtung 110 für die Öffnung 90 ist spiegelsymmetrisch zu der Abdeckvorrichtung 20 ausgeführt, befindet sich jedoch hier im Gegensatz zu der Abdeckvorrichtung 20 im "Einschrumpfzustand". Im Übrigen korrespondiert der konstruktive Aufbau sowie die Funktionsweise der Abdeckvorrichtung 110 mit dem der Abdeckvorrichtung 20, so dass an dieser Stelle - um inhaltliche Wiederholungen zu vermeiden - auf die Erläuterungen zu der Abdeckvorrichtung 20 verwiesen sei (vgl. insb. Fig. 1, 2). Die Hohlkammlippe 40 der Abdeckvorrichtung 20 muss nicht zwingend nach unten, d. h. in Richtung des unteren Öffnungsabschnitts 66 verjüngt ausgebildet sein. Dasselbe gilt für die andere Abdeckvorrichtung 110.

Abweichend von der in den Fig. 1 bis 3 lediglich exemplarisch angeführten Möglichkeit, die beidseitigen Öffnungen eines Querkanals eines Strahlruders mit jeweils einer der erfindungsgemäßen Abdeckvorrichtungen zu verschließen, lassen sich mittels der erfindungsgemäßen Abdeckvorrichtung auch andere, unterhalb der Wasserlinie eines Schiffes liegende Öffnungen verschließbar gestalten.

Infolge des konstruktiv einfachen Aufbaus der volumenveränderbaren bzw. aufblasbaren Hohlkammerlippe - der im Wesentlichen ohne im engeren Sinn mechanisch-bewegliche Komponenten, insbesondere Lagerstellen, Gelenkstellen, Motoren sowie Getriebe, auskommt - ist ein lebensdauerlanger, verlässlicher und wartungsarmer Betrieb der Abdeckvorrichtung gewährleistet.

Die Erfindung betrifft eine Abdeckvorrichtung zum zumindest bereichsweisen Verschließen einer unter Wasser liegenden Öffnung in einem Rumpf eines Wasserfahrzeugs, insbesondere einer Öffnung eines Querkanals eines Strahlruders. Erfindungsgemäß weist die Abdeckvorrichtung mindestens eine volumenveränderbare Hohlkammerlippe mit mindestens einem Auftriebskörper auf und die mindestens eine Hohlkammerlippe ist durch die Zufuhr oder die Abfuhr eines Fluids, insbesondere Luft, in einen Expansionszustand oder in einen Einschrumpfzustand versetzbar. Infolge der volumenveränderbaren bzw. aufblasbaren Abdeckvorrichtung ist ein zuverlässiger und zugleich wartungsarmer Betrieb der Abdeckvorrichtung gegeben. Darüber hinaus hat die Erfindung ein Strahlruder, insbesondere ein Bug- oder Heckstrahlruder zum Gegenstand.

**Bezugszeichenliste**

| | | | |
|---|---|---|---|
| 10. | Rumpf | 80. | Tiefpunkt |
| 12. | Wasserfahrzeug | | |
| 14. | Wasser | | |
| 16. | Öffnung (allgemein) | | |
| | | 90. | Öffnung(Querkanal) |
| 20. | Abdeckvorrichtung | 92. | Vertiefung |
| 22. | Öffnung (Querkanal) | 94. | Formgebungselement |
| 24. | Querkanal (Strahlruder) | 96. | Formgebungselement |
| 26. | Strahlruder | 98. | Formgebungselement |
| 28. | Antriebseinheit | | |
| 30. | Propeller | | |
| 32. | Längsachse (Rumpf) | | |
| 34. | Bug- oder Heckstrahlruder | 110. | Abdeckvorrichtung |
| | | | |
| 40. | Hohlkammerlippe | | |
| 42. | Lagerraum | | |
| 44. | Anschluss | | |
| 46. | Fluid | | |
| 48. | Druckluft (Luft) | | |
| 50. | Auftriebskörper | | |
| 52. | Flächengebilde | | |
| 54. | freies Ende | | |
| 56. | festes Ende | | |
| 58. | Deckel (Lagerraum) | | |
| 60. | bistabiles Federelement | | |
| 62. | Gewässergrund | | |
| 64. | oberer Öffnungsabschnitt | | |
| 66. | unterer Öffnungsabschnitt | | |
| 68. | Gitter | | |
| 70. | Anlageelement | | |

## Patentansprüche

1. Abdeckvorrichtung (20, 110) zum zumindest bereichsweisen Verschließen einer unter Wasser liegenden Öffnung (16) in einem Rumpf (10) eines Wasserfahrzeugs (12), insbesondere einer Öffnung (22, 90) eines Querkanals (24) eines Strahlruders (26), wobei die Abdeckvorrichtung (20, 110) mindestens eine volumenveränderbare Hohlkammerlippe (40) aufweist, die durch die Zufuhr oder die Abfuhr eines Fluids (46), insbesondere Luft (48), in einen Expansionszustand oder in einen Einschrumpfzustand versetzbar ist,
wobei die Hohlkammerlippe (40) mit einem fluiddichten und flexiblen Flächengebilde (52) aufgebaut ist,
**dadurch gekennzeichnet, dass**
die Hohlkammerlippe (40) mindestens einen Auftriebskörper (50) umfasst, dessen Auftriebskraft einen Übergang vom Expansionszustand in den Einschrumpfzustand der Hohlkammerlippe (40) unterstützt, wobei der mindestens eine Auftriebskörper (50) im Bereich des freien Endes (54) der Hohlkammerlippe (40) angeordnet ist und eine geringere Dichte als Wasser aufweist.

2. Abdeckvorrichtung (20, 110) nach Patentanspruch 1, **dadurch gekennzeichnet, dass** die Hohlkammerlippe (40) mindestens ein biegeschlaffes und zugfestes Formgebungselement (94, 96, 98) aufweist.

3. Abdeckvorrichtung (20, 110) nach einem der Patentansprüche 1 oder 2, **dadurch gekennzeichnet, dass** die Öffnung (16, 22, 90) im Expansionszustand der Hohlkammerlippe (40) im Wesentlichen vollständig verschlossen ist und im Einschrumpfzustand im Wesentlichen vollständig freigegeben ist.

4. Abdeckvorrichtung (20, 110) nach einem der Patentansprüche 1 bis 3, **dadurch gekennzeichnet, dass** im Bereich eines freien Endes (54) der Hohlkammerlippe (40) zumindest abschnittsweise mindestens ein bistabiles Federelement (60) angeordnet ist.

5. Abdeckvorrichtung (20, 110) nach Patentanspruch 4, **dadurch gekennzeichnet, dass** ein Wechsel zwischen dem Expansionszustand und dem Einschrumpfzustand der Hohlkammerlippe (40) und umgekehrt aufgrund des bistabilen Federelements (60) sprunghaft erfolgt.

6. Abdeckvorrichtung (20, 110) nach einem der Patentansprüche 1 bis 5, **dadurch gekennzeichnet, dass** in der Öffnung (16, 22, 90) zumindest bereichsweise ein Anlageelement (70) mit einem kleinen Strömungswiderstand, insbesondere ein Gitter (68), angeordnet ist.

7. Abdeckvorrichtung (20, 110) nach einem der Patentansprüche 1 bis 6, **dadurch gekennzeichnet, dass** die mindestens eine Hohlkammerlippe (40) im Einschrumpfzustand vollständig in einem Lagerraum (42) und das freie Ende (54) der Hohlkammerlippe (40) im Expansionszustand zumindest bereichsweise formschlüssig in einer Vertiefung (92) aufnehmbar ist.

8. Strahlruder (26), insbesondere Bug- oder Heckstrahlruder (34), für ein Wasserfahrzeug (12) mit mindestens einer Abdeckvorrichtung (20, 110) nach einem der Patentansprüche 1 bis 7 zum Abdecken mindestens einer Öffnung (22, 90) eines Querkanals (24) des Strahlruders (26).

## Claims

1. Covering device (20, 110) for at least regionally closing an underwater opening (16) in a hull (10) of a watercraft (12), in particular an opening (22, 90) of a transverse channel (24) of a thruster (26), wherein the covering device (20, 110) has at least one variable-volume hollow-chamber lip (40), which is able to be set into an expanded state or into a contracted state by the feeding or the discharging of a fluid (46), in particular air (48),
wherein the hollow-chamber lip (40) is constructed with a fluid-tight and flexible sheet-like structure (52),
**characterized in that**
the hollow-chamber lip (40) comprises at least one buoyancy body (50), the buoyancy of which supports a transition from the expanded state into the contracted state of the hollow-chamber lip (40), wherein the at least one buoyancy body (50) is arranged in the region of the free end (54) of the hollow-chamber lip (40) and has a lower density than water.

2. Covering device (20, 110) according to Claim 1, **characterized in that** the hollow-chamber lip (40) has at least one pliable and tension-resistant shaping element (94, 96, 98).

3. Covering device (20, 110) according to either of Claims 1 and 2, **characterized in that** the opening (16, 22, 90) is substantially fully closed in the expanded state of the hollow-chamber lip (40) and is substantially fully open in the contracted state.

4. Covering device (20, 110) according to one of Claims 1 to 3, **characterized in that** at least one bistable spring element (60) is arranged at least locally in the region of a free end (54) of the hollow-chamber lip (40).

5. Covering device (20, 110) according to Claim 4, **characterized in that** a change between the expanded state and the contracted state of the hollow-chamber lip (40) and vice versa takes place abruptly on account of the bistable spring element (60).

6. Covering device (20, 110) according to one of Claims 1 to 5, **characterized in that** an abutment element (70) with low flow resistance, in particular a grating (68), is arranged at least regionally in the opening (16, 22, 90) .

7. Covering device (20, 110) according to one of Claims 1 to 6, **characterized in that** the at least one hollow-chamber lip (40) is able to be received fully in a storage space (42) in the contracted state and the free end (54) of the hollow-chamber lip (40) is able to be received at least regionally in a form-fitting manner in a recess (92) in the expanded state.

8. Thruster (26), in particular bow thruster or stern thruster (34), for a watercraft (12), having at least one covering device (20, 110) according to one of Claims 1 to 7 for covering at least one opening (22, 90) of a transverse channel (24) of the thruster (26) .

## Revendications

1. Dispositif de recouvrement (20, 110) destiné à fermer au moins partiellement une ouverture (16), située sous l'eau, dans une coque (10) d'un engin nautique (12), en particulier une ouverture (22, 90) d'un conduit transversal (24) d'un propulseur (26), le dispositif de recouvrement (20, 110) comportant au moins une lèvre à chambre creuse (40) de volume réglable qui peut être amenée dans un état expansé ou un état rétracté par amenée ou évacuation d'un fluide (46), en particulier de l'air (48),
la lèvre à chambre creuse (40) étant conformée avec une structure surfacique (52) flexible et étanche aux fluides,
**caractérisé en ce que**
la lèvre à chambre creuse (40) comprend au moins un corps flottant (50) dont la flottabilité favorise une transition de l'état expansé à l'état rétracté de la lèvre à chambre creuse (40), l'au moins un corps flottant (50) est disposé dans la zone de l'extrémité libre (54) de la lèvre à chambre creuse (40) et a une densité inférieure à celle de l'eau.

2. Dispositif de recouvrement (20, 110) selon la revendication 1, **caractérisé en ce que** la lèvre à chambre creuse (40) comporte au moins un élément de mise en forme (94, 96, 98) souple et résistant à la traction.

3. Dispositif de recouvrement (20, 110) selon l'une des revendications 1 et 2, **caractérisé en ce que** l'ouverture (16, 22, 90) est sensiblement complètement fermée à l'état expansé de la lèvre à chambre creuse (40) et est sensiblement complètement libérée à l'état rétracté.

4. Dispositif de recouvrement (20, 110) selon l'une des revendications 1 à 3, **caractérisé en ce qu'**au moins un élément à ressort bistable (60) est disposé au moins par portion au niveau d'une extrémité libre (54) de la lèvre à chambre creuse (40).

5. Dispositif de recouvrement (20, 110) selon la revendication 4, **caractérisé en ce qu'**un passage de l'état expansé à l'état rétracté de la lèvre à chambre creuse (40) et inversement est effectué brusquement du fait de l'élément à ressort bistable (60).

6. Dispositif de recouvrement (20, 110) selon l'une des revendications 1 à 5, **caractérisé en ce qu'**un élément d'appui (70) à faible résistance à l'écoulement, notamment une grille (68), est disposé dans l'ouverture (16, 22, 90) au moins dans certaines zones.

7. Dispositif de recouvrement (20, 110) selon l'une des revendications 1 à 6, **caractérisé en ce que** l'au moins une lèvre à chambre creuse (40) peut être reçue à l'état rétracté complètement dans un espace de stockage (42) et l'extrémité libre (54) de la lèvre à chambre creuse (40) peut être reçue à l'état expansé dans un évidement (92) au moins dans certaines zones par complémentarité de formes.

8. Propulseur (26), notamment propulseur d'étrave ou de poupe (34), destiné à un engin nautique (12) et comprenant au moins un dispositif de recouvrement (20, 110) selon l'une des revendications 1 à 7 pour recouvrir au moins une ouverture (22, 90) d'un conduit transversal (24) du propulseur (26).
